(19) Europäisches Patentamt
European Patent Office
Office européen des brevets

(11) Veröffentlichungsnummer: **0 335 834**
**A2**

(12) # EUROPÄISCHE PATENTANMELDUNG

(21) Anmeldenummer: **89810218.1**

(22) Anmeldetag: **21.03.89**

(51) Int. Cl.[4]: **C 09 B 29/039**
D 06 P 1/18

(30) Priorität: **29.03.88 CH 1185/88**

(43) Veröffentlichungstag der Anmeldung:
**04.10.89 Patentblatt 89/40**

(84) Benannte Vertragsstaaten: **CH DE FR GB LI**

(71) Anmelder: **CIBA-GEIGY AG**
**Klybeckstrasse 141**
**CH-4002 Basel (CH)**

(72) Erfinder: **Naef, Rudolf, Dr.**
**Im Budler 6**
**CH-4419 Lupsingen (CH)**

(54) **Heteroaromatische Azofarbstoffe.**

(57) Die neuen Farbstoffe der im Anspruch 1 angegebenen Formel, welche keine wasserlöslichmachende Gruppe aufweisen, eignen sich insbesondere zum Färben und Bedrucken von Textilmaterial aus Polyesterfasern, die Farbstoffe, welche mindestens eine Sulfogruppe aufweisen, eignen sich insbesondere zum Färben und Bedrucken von Textilmaterial aus Polyamidfasern.

EP 0 335 834 A2

**Beschreibung**

## Heteroaromatische Azofarbstoffe

Die vorliegende Erfindung betrifft Azofarbstoffe, welche sich von 4-Aminopyrazoloisothiazolen als Diazokomponente ableiten, die Herstellung dieser Azofarbstoffe sowie ihre Verwendung als Farbstoffe für Textilmaterial.

Die erfindungsgemässen Farbstoffe entsprechen der Formel

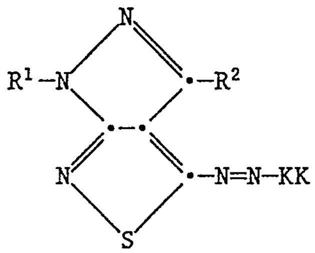
(1)

worin
$R^1$ einen gegebenenfalls substituierten Alkyl- oder Arylrest,
$R^2$ Wasserstoff oder einen gegebenenfalls substituierten Alkyl- oder Arylrest und
KK den Rest einer Kupplungskomponente bedeuten.

Unter Alkylresten sind erfindungsgemäss generell geradkettige oder verzweigte oder cyclische Alkylgruppen zu verstehen. Es handelt sich z.B. um Methyl, Ethyl, Propyl, i-Propyl, Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert.-Octyl, 2-Ethylhexyl, n-Nonyl, Isononyl, Decyl, Dodecyl, Cyclopentyl, Cyclohexyl, Methylcyclohexyl sowie die dazugehörenden Isomeren. Die Alkylreste enthalten vorzugsweise 1 bis 12 C-Atome, vor allem 1 bis 6 C-Atome.

Diese Alkylreste können substituiert sein, z.B. durch Hydroxy, Alkoxy, Cyan oder Phenyl. Beispiele für solche substituierten Alkylreste sind Hydroxyethyl, Methoxymethyl, Ethoxyethyl, Cyanethyl, Propoxypropyl oder Benzyl.

Stellen $R^1$ und/oder $R^2$ einen Arylrest dar, so kann dieser carbocyclisch oder heterocyclisch sein. Es handelt sich, wie generell bei Aryl in dieser Anmeldung, z.B. um einen Phenyl-, Naphthyl-1-, Naphthyl-2-, Pyridyl-2-, Pyridyl-3-, Pyridyl-4-, Pyrimidyl-2-oder Thienyl-2-Rest. Diese Reste können substituiert sein, z.B. durch Halogen, wie Fluor, Brom, Jod oder vor allem Chlor, $C_1$-$C_6$-Alkyl, $C_1$-$C_4$-Alkoxy, Nitro, CN, -NH-$R^3$, -NH-Acyl, Phenoxy, -COO$R^3$, -CONH$R^3$, gegebenenfalls substituiertes Phenyl, Sulfo oder $C_1$-$C_4$-Alkylsulfon, wobei $R^3$ Wasserstoff, gegebenenfalls substituiertes $C_1$-$C_6$-Alkyl oder gegebenenfalls substituiertes Phenyl bedeutet.

Die Reste $R^1$ und $R^2$ können 1 bis 3 der vorstehend genannten Substituenten aufweisen.

Ist der Substituent -NH-Acyl, so kann es sich bei dem Acylrest z.B. um einen $C_2$-$C_6$-Alkanoyl- oder Benzoylrest handeln. Beispiele für geeignete $C_2$-$C_6$-Alkanoylreste sind Acetyl, Propionyl, Butyryl, Isobutyryl, Valeryl, Isovaleryl oder Pivaloyl.

Das Benzoyl kann gegebenenfalls in der zuvor für Aryl beschriebenen Weise weitersubstituiert sein.

Ist der Substituent Phenoxy, so kann diese unsubstituiert oder in der zuvor für Phenyl beschriebenen Weise weitersubstituiert sein; vorzugsweise ist das Phenoxy hierbei nicht weitersubstituiert.

$R^1$ stellt vorzugsweise einen $C_1$-$C_6$-Alkylrest dar, welches unsubstituiert oder durch $C_1$-$C_4$-Alkoxy, Cyan oder Phenyl substituiert ist, oder einen Phenylrest, welcher unsubstituiert oder durch Chlor, $C_1$-$C_4$-Alkyl oder -Alkoxy, Nitro, $C_1$-$C_4$-Alkylamino, Sulfo, $C_1$-$C_4$-Alkylsulfon, Phenyl oder Phenoxy substituiert ist.

In besonders wertvollen Farbstoffen der Formel (1) stellt $R^1$ einen unsubstituierten $C_1$-$C_4$-Alkylrest oder einen gegebenenfalls durch Methyl, Ethyl, Methoxy, Ethoxy, Nitro, Chlor, Sulfo, Acetylamino, Phenyl oder Phenoxy substituierten Phenylrest dar.

Unter diesen sind diejenigen besonders bevorzugt, bei denen $R^1$ ein unsubstituierter oder durch Chlor substituierter Phenylrest ist.

$R^2$ stellt vorzugsweise Wasserstoff oder einen $C_1$-$C_6$-Alkylrest dar, welcher unsubstituiert oder durch $C_1$-$C_4$-Alkoxy, Cyan oder Phenyl substituiert ist, oder einen Phenylrest, welcher unsubstituiert oder durch Chlor, $C_1$-$C_4$-Alkyl oder -Alkoxy, Nitro, $C_1$-$C_4$-Alkylamino, Sulfo, $C_1$-$C_4$-Alkylsulfon, Phenyl oder Phenoxy substituiert ist.

In besonders wertvollen Farbstoffen der Formel (1) stellt $R^2$ Wasserstoff, einen unsubstituierten $C_1$-$C_4$-Alkylrest oder einen gegebenenfalls durch Methyl, Ethyl, Methoxy, Ethoxy, Nitro, Chlor, Sulfo, Acetylamino, Phenyl oder Phenoxy substituierten Phenylrest dar.

Unter diesen sind diejenigen besonders bevorzugt, bei denen $R^2$ Wasserstoff oder ein unsubstituierter $C_1$-$C_4$-Alkylrest ist.

Als Kupplungskomponente KK kommen die bei Azofarbstoffen üblichen und aus der einschlägigen Literatur bekannten Kupplungskomponenten in Frage.

Aus der Vielzahl der Möglichkeiten seien beispielsweise erwähnt: Kupplungskomponenten der Benzolreihe, der Naphthalinreihe, der offenkettigen methylenaktiven Verbindungen (wie z.B. der Acylacetarylamide) sowie der heterocyclischen Reihe.

Beispiele für die genannten Reste von Kupplungskomponenten KK sind Reste aus der Reihe der Acylacetarylamide, Phenole, Pyridone, Chinoline, Pyrazole, Indole, Diphenylamine, Aniline, Aminopyridine, Pyrimidine, Pyrimidone, Naphthole, Naphthylamine, Aminothiazole, Thiophene oder Hydroxypyridine.

Besonders zu erwähnende Reste KK sind solche aus der Reihe der Acetoacetanilide, Phenole, Aniline, Diphenylamine, Naphthylamine, Naphthole, Indole, Chinoline, Pyridone, Pyrazole, Chinolone und Aminopyridine.

Diese Kupplungskomponenten können weitere Substituenten tragen, die in der Farbstoffchemie für Kupplungskomponenten üblich sind, beispielsweise Hydroxy, Amino, Alkylamino, Dialkylamino, Halogen, Alkoxy, Aryl, Aryloxy, Alkylcarbonylamino, Arylcarbonylamino, Alkylsulfonylamino oder Sulfo.

Wegen ihrer besonders guten färberischen Eigenschaften sind solche Farbstoffe der Formel (1) besonders bevorzugt, bei denen KK den Rest eines Anilins, Naphthylamins oder Tetrahydrochinolins bedeutet, wobei diese Reste durch $C_1$-$C_4$-Alkyl, $C_1$-$C_4$-Alkylcarbonylamino, Phenyl, $C_1$-$C_4$-Alkylphenyl oder Sulfo substituiert sein können.

Besonders bevorzugte erfindungsgemässe Azofarbstoffe sind diejenigen der Formel (1), worin
$R^1$ einen unsubstituierten $C_1$-$C_4$-Alkylrest oder einen gegebenenfalls durch Methyl, Ethyl, Methoxy, Ethoxy, Nitro, Chlor, Sulfo, Acetylamino, Phenyl oder Phenoxy substituierten Phenylrest,
$R^2$ Wasserstoff, einen unsubstituierten $C_1$-$C_4$-Alkylrest oder einen gegebenenfalls durch Methyl, Ethyl, Methoxy, Ethoxy, Nitro, Chlor, Sulfo, Acetylamino, Phenyl oder Phenoxy substituierten Phenylrest, und
KK den Rest einer Kupplungskomponente aus der Reihe der Acetoacetanilide, Phenole, Aniline, Diphenylamine, Naphthylamine, Naphthole, Indole, Chinoline, Pyridone, Pyrazole, Chinolone und Aminopyridine bedeutet, wobei diese Reste unsubstituiert oder durch Hydroxy, Amino, Alkylamino, Dialkylamino, Halogen, Alkoxy, Aryl, Aryloxy, Alkylcarbonylamino, Arylcarbonylamino, Alkylsulfonylamino oder Sulfo substituiert sind.

Unter diesen sind diejenigen besonders bevorzugt, bei denen $R^1$ einen unsubstituierten oder durch Chlor substituierten Phenylrest, $R^2$ Wasserstoff oder einen unsubstituierten $C_1$-$C_4$-Alkylrest und KK den Rest eines Anilins, Naphthylamins oder Tetrahydrochinolins bedeutet, wobei diese Reste durch $C_1$-$C_4$-Alkyl, $C_1$-$C_4$-Alkylcarbonylamino, Phenyl, $C_1$-$C_4$-Alkylphenyl oder Sulfo substituiert sein können.

Die neuen Azofarbstoffe der Formel (1) können nach an sich bekannten Verfahren hergestellt werden. Man erhält sie beispielsweise, indem man eine Verbindung der Formel

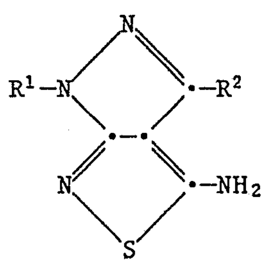

(2)

diazotiert und auf eine Kupplungskomponente
H—KK (3)
kuppelt, wobei $R^1$, $R^2$ und KK die unter der Formel (1) angegebene Bedeutung aufweisen.

Die Verbindungen der Formel (2) sind bekannt oder können nach an sich bekannten Methoden hergestellt werden, z.B. gemäss der in Il. Farmaco, Ed. Sci., 42, 133 (1987) beschriebenen Arbeitsweise.

Ebenfalls bekannt sind die Kupplungskomponenten H-KK.

Die Diazotierung der Verbindungen der Formel (2) erfolgt in an sich bekannter Weise, z.B. mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Bei der Diazotierung kann eine zusätzliche Säure im Reaktionsmedium anwesend sein, z.B. Phosphorsäure, Schwefelsäure, Essigsäure, Propionsäure, Salzsäure oder Mischungen dieser Säuren, z.B. Mischungen aus Phosphorsäure und Essigsäure. Zweckmässig wird die Diazotierung bei Temperaturen von -10 bis 30°C, z.B. von -10°C bis Raumtemperatur, durchgeführt.

Die Kupplung der diazotierten Verbindung der Formel (2) auf die Kupplungskomponente H-KK erfolgt ebenfalls in bekannter Weise, beispielsweise in saurem, wässrigem oder wässrig-organischem Medium, vorteilhaft bei Temperaturen von -10 bis 30°C, insbesondere unter 10°C. Als Säuren verwendet man z.B. Salzsäure, Essigsäure, Schwefelsäure oder Phosphorsäure. Diazotierung und Kupplung können beispielsweise im Eintopfverfahren, also im gleichen Reaktionsmedium durchgeführt werden.

Falls die erfindungsgemässen Verbindungen der Formel (1) keine wasserlöslichmachenden Gruppen, insbesondere keine Sulfogruppen aufweisen, so können sie als Dispersionsfarbstoffe zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen

Verbindungen gefärbt oder bedruckt werden.

Als halbsynthetische Textilmaterialien kommen vor allem Cellulose-2 1/2-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus $\alpha,\alpha$-Dimethyl-4,4′-dihydroxy-diphenylmethan und Phosgen, aus Fasern auf Polyvinylchlorid- sowie Polyamid-Basis.

Die Applikation der erfindungsgemässen Dispersionsfarbstoffe auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140° C. Cellulose-2 1/2-acetat färbt man vorzugsweise zwischen ungefähr 65 bis 85° C und Cellulosetriacetat bei Temperaturen bis zu 115° C.

Die neuen Dispersionsfarbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Dispersionsfarbstoffe eignen sich aber insbesonders zum Färben nach dem Thermosol-Verfahren.

Das genannte Textilmaterial kann dabei in den verschiedensten Verarbeitungsformen vorliegen, wie z.B. als Faser, Faden oder Vlies, als Gewebe oder Gewirke.

Es ist vorteilhaft, die erfindungsgemässen Dispersionsfarbstoffe vor ihrer Verwendung in ein Farbstoffpräparat überzuführen. Hierzu wird der Farbstoff vermahlen, so dass seine Teilchengrösse im Mittel zwischen 0,01 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser färben und bedrucken.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Poylvinylalkohole.

Die erfindungsgemässen Dispersionsfarbstoffe sind praktisch umempfindlich gegen Carrier und verleihen den genannten Materialien, vor allem dem Polyestermaterial, egale blaue bis violette Farbtöne von sehr guten Gebrauchs-Echtheiten, wie vor allem guter Lichtechtheit, Thermofixier-, Plissier-, Chlor- und Nassechtheit wie Wasser-, Schweiss- und Waschechtheit; die Ausfärbungen sind ferner gekennzeichnet durch eine gute pH-Stabilität und sehr gute Reibechtheit. Es werden ausserdem sehr farbstarke Färbungen erzielt. Besonders hervorzuheben sind die gute Sublimierechtheit und die gute Thermofixierechtheit der erhaltenen Färbungen.

Die erfindungsgemässen Farbstoffe können auch gut verwendet werden zur Herstellung von Mischnuancen zusammen mit anderen Farbstoffen. Selbstverständlich können auch Mischungen der erfindungsgemässen Farbstoffe untereinander verwendet werden.

Falls die Monoazofarbstoffe der Formel (1) eine Sulfogruppe enthalten, so liegt diese entweder in der Form der freien Sulfonsäure oder vorzugsweise als deren Salz vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Triäthanolamins genannt.

Die sulfogruppenhaltigen Azofarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls auch Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Die sulfogruppenhaltigen Azofarbstoffe der Fomel (1) ergeben Färbungen mit guten Nass- und Lichtechtheiten. Besonders hervorzuheben ist es, dass die Farbstoffe eine gute Löslichkeit und Elektrolytlöslichkeit bei guten Auszieheigenschaften und hoher Farbstoff-Fixierung aufweisen, und dass sich die nicht fixierten Anteile leicht entfernen lassen. Ausser der guten Wasserlöslichkeit zeichnen sich die Azofarbstoffe der Formel (1) durch hohe Lösungsstabilität in Klotzflotten auch bei verschiedenen pH-Werten sowie sehr gute Druckpastenstabilität aus.

Die sulfogruppenhaltigen Azofarbstoffe der Formel (1) eignen sich zum Färben und Bedrucken der verschiedensten Materialien, insbesondere aber von Seide, Wolle und Polyamidfasern. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird.

Sie eignen sich auch zum Bedrucken von Stickstoffhaltigen Fasern, z.B. von Wolle, Polyamiden oder von Seide oder Wolle enthaltenden Mischgeweben.

Es empfiehlt sich, die Färbungen und Drucke einem gründlichen Spülen mit kaltem und heissem Wasser,

gegebenenfalls unter Zusatz eines dispergierend wirkenden und die Diffusion der nicht fixierten Anteile fördernden Mittels zu unterwerfen.

In den folgenden Beispielen stehen Teile für Gewichtsteile und % für Gewichtsprozent. Die Temperaturen sind Celsiusgrade.

Beispiel 1:

In einer Mischung von 40 ml Eisessig und 10 ml Propionsäure werden 2,2 g 4-Amino-1-phenylpyrazolo[3,4-c]isothiazol suspendiert und nach Abkühlen auf 0° C mit 5 ml konz. Schwefelsäure versetzt. Unter guter Kühlung werden 0,7 g Natriumnitrit, gelöst in 10 ml Wasser, zugetropft, wobei sich die Suspension allmählich mit rosaroter Farbe löst. Die Lösung wird in eine Lösung von 2,5 g 3-Diethylaminoacetanilid in 30 ml Eisessig, 40 ml Ethanol und 50 ml Wasser getropft, wobei der pH durch laufende Zugabe von 2 N Natronlauge bei ca. 3,5 gehalten wird. Der schwärzliche Niederschlag wird abfiltriert und aus Dimethylformamid/Wasser umkristallisiert, wobei 2,6 g (60 %) grünliche Kristalle vom Smp. 194° C isoliert werden. Der Farbstoff entspricht der Formel

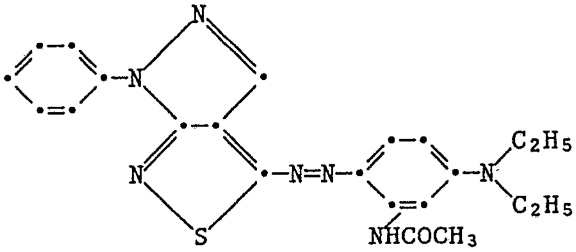

und färbt Polyestermaterial in rotstichig blauen Tönen mit sehr guten Echtheiten, insbesondere sehr guter Licht- und Sublimierechtheit.

Beispiel 2:

Auf analoge Weise wie im Beispiel 1 werden 2,2 g 4-Amino-1-phenylpyrazolo[3,4-c]isothiazol mit 1,9 g 1,2,2,4-Tetramethyl-1,2,3,4-tetrahydrochinolin zur Reaktion gebracht, wobei nach Umkristallisation aus Dimethylformamid/Ethanol/Wasser grünglänzende Kristalle vom Smp. 190° C anfallen. Der Farbstoff entspricht der Formel

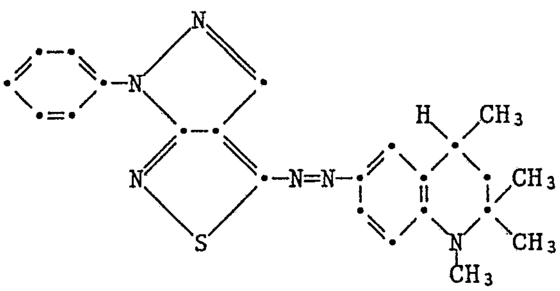

und färbt Polyesterfasern in blau-violetten Tönen mit sehr guten Echtheiten.

Beispiel 3:

Auf analoge Art wie im Beispiel 1 werden 2,2 g 4-Amino-1-phenylpyrazolo[3,4-c]isothiazol mit 1,72 g N,N-Dimethyl-1-naphthylamin gekuppelt. Man erhält nach Umkristallisation aus Dimethylformamid/Ethanol/Wasser grünschwarze Kristalle vom Smp. 200° C.

Der Farbstoff entspricht der Formel

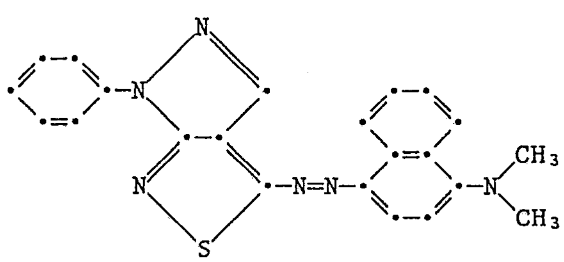

und färbt Polyestermaterial in blauen Tönen mit guten Echtheiten.

Beispiel 4:

Auf analoge Art wie im Beispiel 1 werden 2,2 g 4-Amino-1-phenylpyrazolo[3,4-c]isothiazol mit 1,6 g N,N-Diethyl-m-toluidin gekuppelt. Nach Umkristallisation aus Dimethylformamid/Wasser erhält man grünliche Kristalle vom Smp. 195°C.

Der Farbstoff entspricht der Formel

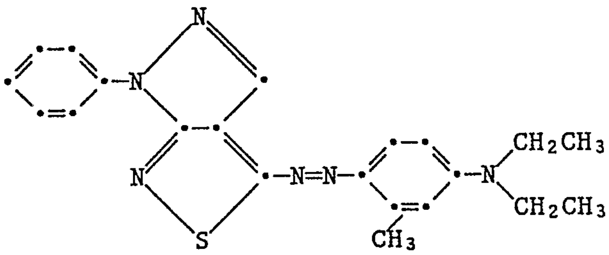

und färbt Polyestermaterial in blau-violetten Tönen mit guten Echtheiten.

Beispiel 5:

Auf analoge Art wie im Beispiel 1 reagieren 2,3 g 4-Amino-3-methyl-1-phenylpyrazolo[3,4-c]isothiazol mit 1,64 ml N,N-Dimethyl-1-naphthylamin. Die Reinigung auf einer Kieselgel-Säule mit Tetrachlorkohlenstoff ergibt dunkelblaue Kristalle vom Smp. 180°C.

Der Farbstoff entspricht der Formel

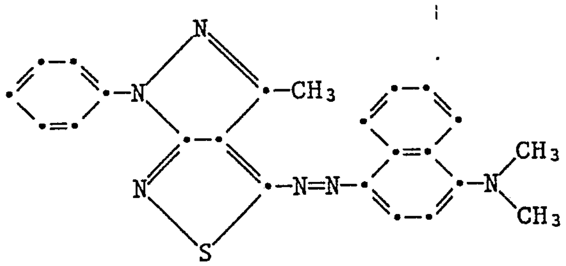

und färbt Textilmaterial aus Polyester in blaustichig violette Tönen mit guten Echtheiten.

Beispiel 6:

Analog wie im Beispiel 1 lassen sich 2,3 g 4-Amino-3-methyl-1-phenylpyrazolo[3,4-c]isothiazol mit 1,9 g 1,2,2,4-Tetramethyl-1,2,3,4-tetrahydrochinolin umsetzen, wobei nach Umkristallisation aus Dimethylformamid/Wasser tiefblaue Kristalle vom Smp. 210-211°C isoliert werden.

Der Farbstoff entspricht der Formel

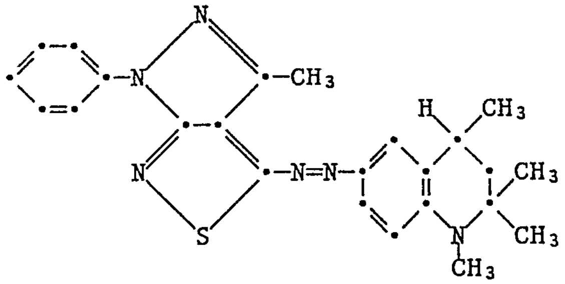

und färbt Polyestermaterial in blaustichig violetten Tönen mit guten Echtheiten.

Beispiel 7:

In analoger Weise wie im Beispiel 1 werden 2,3 g 4-Amino-3-methyl-1-phenylpyrazolo[3,4-c]isothiazol mit 1,6 g N,N-Diethyl-m-toluidin zur Reaktion gebracht, wobei nach Reinigung auf einer Kieselgel-Säule mit Tetrachlorkohlenstoff und Umkristallisation aus Dimethylformamid/Wasser tiefblaue Kristalle vom Smp. 165°C isoliert werden.

Der Farbstoff entspricht der Formel

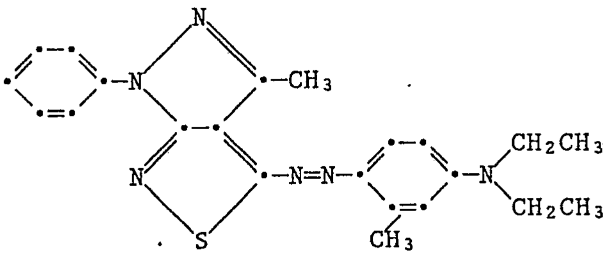

und färbt Polyestermaterial in blauen Tönen mit guten Echtheiten.

Beispiel 8:
Auf analoge Art wie im Beispiel 1 werden 2,3 g 4-Amino-3-methyl-1-phenylpyrazolo[3,4-c]isothiazol mit 2,5 g 3-Diethylaminoacetanilid umgesetzt, wobei nach zweimaliger Umkristallisation aus Dimethylformamid/Wasser schwärzliche Kristalle vom Smp. 199-200°C isoliert werden.
Der Farbstoff entspricht der Formel

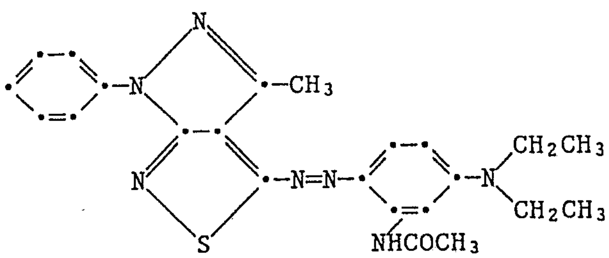

und färbt Polyestermaterial in leicht rotstichig blauen Tönen mit guten Echtheiten.

Beispiel 9:
In einer Mischung von 40 ml Eisessig und 10 ml Propionsäure werden 2,2 g 4-Amino-1-phenylpyrazolo[3,4-c]isothiazol suspendiert und nach Abkühlen auf 0°C mit 5 ml konz. Schwefelsäure versetzt. Unter guter Kühlung werden 0,7 g Natriumnitrit, gelöst in 10 ml Wasser, zugetropft, wobei sich die Suspension allmählich mit rosaroter Farbe löst. Die erhaltene Lösung wird in eine Lösung von 3,1 g 1-(4-Toluidino)-naphthalin-8-sulfonsäure getropft, wobei die Temperatur durch Eiszugabe unter 5°C und der pH durch stetige Zugabe von 2 N Natronlauge bei ca. 3,5 gehalten wird. Der dunkelblaue schmierige Niederschlag wird durch Chloroform extrahiert, die organische Phase mit gesättigter wässriger Kochsalzlösung gewaschen und nach Trocknung mit Natriumsulfat eingedampft, wobei ein schwärzlicher Niederschlag zurückbleibt.
Der Farbstoff entspricht der Formel

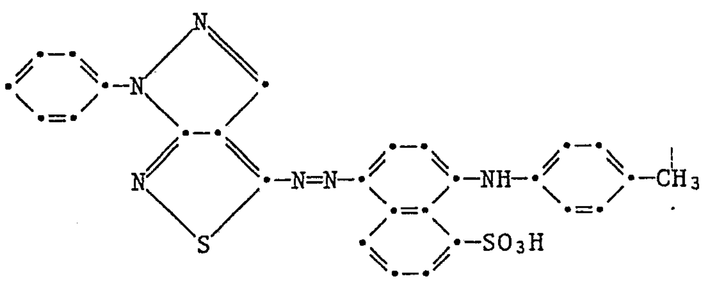

und färbt Textilmaterial aus Polyamid in blauen Tönen mit sehr guten Echtheiten, insbesondere sehr guter Lichtechtheit. Der Schmelzpunkt des Farbstoffes liegt oberhalb 250°C (Zersetzung).

Beispiel 10:
Analog wie im Beispiel 9 werden 2,3 g 4-Amino-3-methyl-1-phenylpyrazolo[3,4-c]isothiazol mit 3,1 g 1-(4-Toluidino)-naphthalin-8-sulfonsäure umgesetzt, wobei das Rohprodukt durch Dekantieren der Reaktionslösung isoliert und auf einer Kieselgel-Säule mit Chloroform gereinigt wird. Man erhält 3,7 g blauschwarze Kristalle, die sich oberhalb 300°C zersetzen.
Der Farbstoff entspricht der Formel

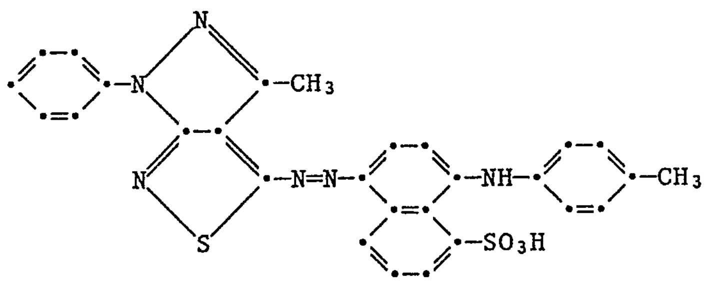

und färbt Polyamidmaterial in grünstichig blauen Tönen mit guten Echtheiten. Der Farbstoff schmilzt oberhalb 300° C unter Zersetzung.

Beispiele 11-15:

Auf analoge Art wie im Beispiel 1 beschrieben, werden die in der folgenden Tabelle aufgeführten Azofarbstoffe erhalten, indem man die entsprechenden Diazo- und Kupplungskomponenten einsetzt. In Spalte 3 der Tabelle sind die Schmelzpunkte der erhaltenen Farbstoffe angegeben und in Spalte 4 die Nuancen der Färbungen auf Textilmaterial aus Polyester.

| Beispiel | Farbstoff | Schmelzpunkt | Nuance |
|---|---|---|---|
| 11 | 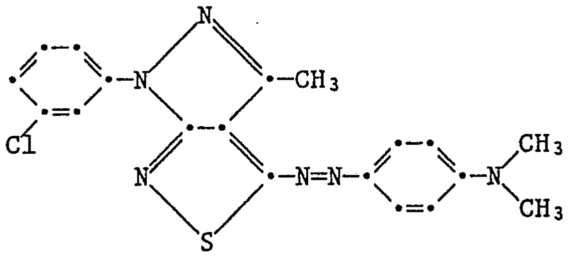 | 218°C | violett |
| 12 | 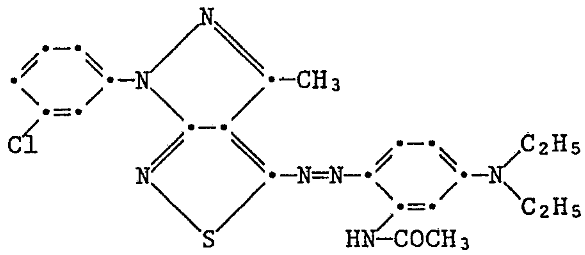 | 220°C | blau |
| 13 | 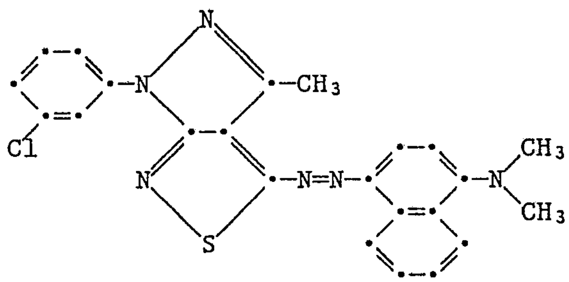 | 118°C | blau |
| 14 | 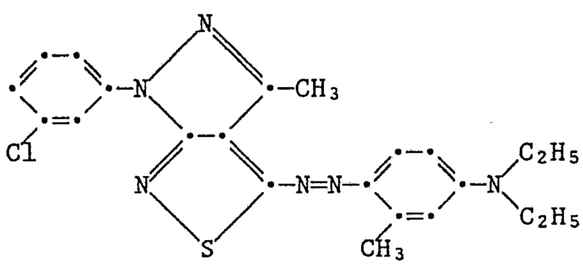 | 183°C | blaustichig violett |
| 15 | 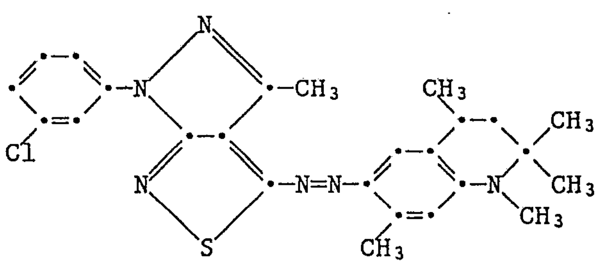 | 198°C | rotstichig blau |

Beispiel 16:

Man arbeitet wie im Beispiel 9 beschrieben, verwendet jedoch anstelle der dort eingesetzten Diazokomponente eine äquivalente Menge 4-Amino-3-methyl-1-(3′-chlor)phenylpyrazolo[3.4-c]isothiazol. Man erhält den Farbstoff der Formel

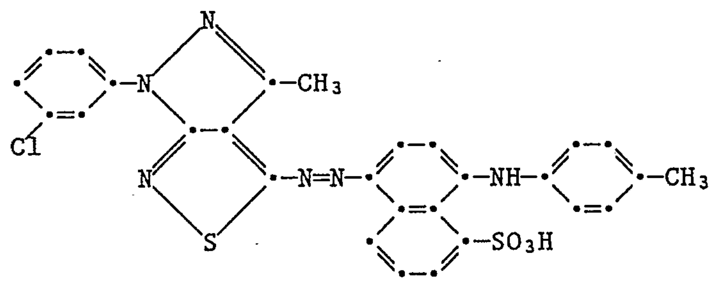

mit einem Schmelzpunkt von 186°C. Der Farbstoff färbt Textilmaterial aus Polyester in grünstichig blauen Tönen mit guten Echtheiten.

Beispiel 17

Man mischt 1 Teil des trockenen, coupagefreien Farbstoffs gemäss Beispiel 1 in einer Sandmühle zusammen mit 2 Teilen Dinaphthylmethandisulfonat (Na-Salz), 34 Teilen Quarzsand und 17 Teilen Wasser und mahlt das Gemisch so lange, bis eine Korngrösse von etwa 2 μ oder kleiner erreicht ist. Die entstehende Suspension wird vom Sand getrennt und der Sprühtrocknung unterworfen, wobei ein pulverförmiges Färbepräparat erhalten wird.

Beispiel 18:

Polyethylenglykolterephthalatgewebe wird auf einem Foulard bei 40° mit einer Flotte folgender Zusammensetzung imprägniert:
20 Teile des gemäss Beispiel 17 erhaltenen Farbstoffpräparates fein dispergiert in
10 Teilen Natriumalginat,
20 Teilen Octylphenolpolyglykoläther und
930 Teilen Wasser.

Das auf ca. 60 % abgequetschte Gewebe wird bei 100° getrocknet und anschliessend während 60 Sekunden bei einer Temperatur von 210° fixiert. Die gefärbte Ware wird mit Wasser gespült, geseift oder reduktiv ge reinigt und getrocknet. Man erhält eine lichtechte rotstichig blaue Färbung, welche sich vor allem durch eine gute Sublimierechtheit auszeichnet.

Beispiel 19:

2 Teile des gemäss Beispiel 17 erhaltenen Farbstoffpräparates werden in 4000 Teilen Wasser, enthaltend 12 Teile des Natriumsalzes von o-Phenylphenol, 2 Teile Ammoniumsulfat sowie 2 Teile des Natriumsalzes der Dinaphthylmethandisulfonsäure, dispergiert. Dann färbt man 100 Teile Garn aus Polyethylenglykolterephthalat 90 Minuten lang bei 95 bis 98° in dieser Flotte.

Die Färbung wird anschliessend gespült und mit wässriger Natronlauge und einem Dispergator nachbehandelt. Man erhält so eine licht- und sublimierechte rotstichig blaue Färbung.

Beispiel 20:

1 Teil des gemäss Beispiel 2 erhaltenen Farbstoffs wird mit 2 Teilen einer 50%igen wässerigen Lösung des Natriumsalzes der Dinaphthylmethandisulfonsäure nass vermahlen und getrocknet.

Dieses Farbstoffpräparat wird mit 40 Teilen einer 10%igen wässerigen Lösung des Natriumsalzes der N-Benzylheptadecyl-benzimidazoldisulfonsäure verrührt und 4 Teile einer 40%igen Essigsäurelösung zugegeben. Durch Verdünnen mit Wasser wird daraus ein Färbebad von 4000 Teilen bereitet.

In dieses Bad geht man bei 50° mit 100 Teilen eines Polyesterfaserstoffes ein, steigert die Temperatur innert einer halben Stunde auf 120 bis 130° und färbt eine Stunde in geschlossenem Gefäss bei dieser Temperatur. Anschliessend wird gut gespült. Man erhält eine violette Färbung mit guten Echtheiten, insbesondere guter Sublimations- und Thermomigrationsechtheit.

Beispiel 21:

Man färbt 10 Teile Helancatricot (Polyamid) in 500 Teilen einer wässrigen Flotte, die 2 g/l Ammonacetat enthält und mit Essigsäure auf pH 5 gestellt wird. Die Flotte enthält 0,7 %, bezogen auf das Fasergewicht, des Farbstoffes gemäss Beispiel 9. Die Färbedauer bei einer Temperatur von 98° beträgt 30 bis 90 Minuten. Das gefärbte Helancastück wird anschliessend herausgenommen und wie üblich gewaschen und getrocknet.

Man erhält ein blau gefärbtes Helancastück, das eine reine Nuance und gute Gesamtechtheiten aufweist.

Beispiel 22:

Man färbt 10 Teile Helancatrikot (Polyamid) in 500 Teilen einer wässrigen Flotte, 1 g/l Mononatriumphosphat enthält und mit Dinatriumphosphat auf ph 6 gestellt wird. Die Flotte enthält 1 % des Farbstoffes gemäss Beispiel 9, bezogen auf das Fasergewicht. Die Färbedauer bei einer Temperatur von 98° beträgt 30 bis 90 Minuten. Das gefärbte Helancastück wird anschliessend herausgenommen und wie üblich gewaschen und getrocknet.

Man erhält ein blau gefärbtes Helancastück, das eine reine Nuance und gute Gesamtechtheiten aufweist.

Beispiel 23:
Man färbte 10 Teile Wollstück in 500 Teilen einer wässrigen Flotte, enthaltend bezogen auf das Fasergewicht 0,45% Farbstoff gemäss Beispiel 10, 5 % Glaubersalz kalz. und 4 % 96%-ige Schwefelsäure. Die Färbedauer bei einer Temperatur von 98° beträgt 30-60 Minuten. Das wie üblich gewaschene und getrocknete Wollstück weist eine blaue Färbung mit sehr guten Allgemeinechtheiten auf.

**Patentansprüche**

1. Azofarbstoffe der Formel

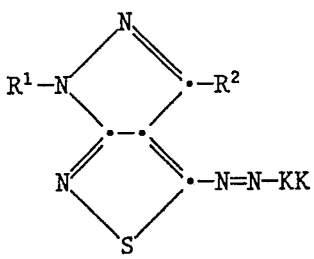

(1)

worin
$R^1$ einen gegebenenfalls substituierten Alkyl- oder Arylrest,
$R^2$ Wasserstoff oder einen gegebenenfalls substituierten Alkyl- oder Arylrest und
KK den Rest einer Kupplungskomponente bedeuten.

2. Azofarbstoffe gemäss Anspruch 1, worin $R^1$ einen $C_1$-$C_6$-Alkylrest darstellt, welcher unsubstituiert oder durch $C_1$-$C_4$-Alkoxy, Cyan oder Phenyl substituiert ist, oder einen Phenylrest, welcher unsubstituiert oder durch Chlor, $C_1$-$C_4$-Alkyl oder -Alkoxy, Nitro, $C_1$-$C_4$-Alkylamino, Sulfo, $C_1$-$C_4$-Alkylsulfon, Phenyl oder Phenoxy substituiert ist.

3. Azofarbstoffe gemäss Anspruch 2, worin $R^1$ einen unsubstituierten $C_1$-$C_4$-Alkylrest oder einen gegebenenfalls durch Methyl, Ethyl, Methoxy, Ethoxy, Nitro, Chlor, Sulfo, Acetylamino, Phenyl oder Phenoxy substituierten Phenylrest darstellt.

4. Azofarbstoffe gemäss Anspruch 1, worin $R^1$ einen unsubstituierten oder durch Chlor substituierten Phenylrest darstellt.

5. Azofarbstoffe gemäss einem der Ansprüche 1-4, worin $R^2$ Wasserstoff oder einen $C_1$-$C_6$-Alkylrest darstellt, welcher unsubstituiert oder durch $C_1$-$C_4$-Alkoxy, Cyan oder Phenyl substituiert ist, oder einen Phenylrest, welcher unsubstituiert oder durch Chlor, $C_1$-$C_4$-Alkyl oder -Alkoxy, Nitro, $C_1$-$C_4$-Alkylamino, Sulfo, $C_1$-$C_4$-Alkylsulfon, Phenyl oder Phenoxy substituiert ist.

6. Azofarbstoffe gemäss Anspruch 5, worin $R^2$ Wasserstoff oder einen unsubstituierten $C_1$-$C_4$-Alkylrest oder einen gegebenenfalls durch Methyl, Ethyl, Methoxy, Ethoxy, Nitro, Chlor, Sulfo, Acetylamino, Phenyl oder Phenoxy substituierten Phenylrest darstellt.

7. Azofarbstoffe gemäss Anspruch 6, worin $R^2$ Wasserstoff oder einen unsubstituierten $C_1$-$C_4$-Alkylrest darstellt.

8. Azofarbstoffe gemäss einem der Ansprüche 1-7, worin KK den Rest einer Kupplungskomponente aus der Reihe der Acylacetarylamide, Phenole, Pyridone, Chinoline, Pyrazole, Indole, Diphenylamine, Aniline, Aminopyridine, Pyrimidine, Pyrimidone, Naphthole, Naphthylamine, Aminothiazole, Thiophene oder Hydroxypyridine bedeutet.

9. Azofarbstoffe gemäss Anspruch 8, worin KK den Rest einer Kupplungskomponente aus der Reihe der Acetoacetanilide, Phenole, Aniline, Diphenylamine, Naphthylamine, Naphthole, Indole, Chinoline, Pyridone, Pyrazole, Chinolone und Aminopyridine bedeutet, wobei diese Reste unsubstituiert oder durch Hydroxy, Amino, Alkylamino, Dialkylamino, Halogen, Alkoxy, Aryl, Aryloxy, Alkylcarbonylamino, Arylcarbonylamino, Alkylsulfonylamino oder Sulfo substituiert sind.

10. Azofarbstoffe gemäss Anspruch 9, worin KK den Rest eines Anilins, Naphthylamins oder Tetrahydrochinolins bedeutet, wobei diese Reste durch $C_1$-$C_4$-Alkyl, $C_1$-$C_4$-Alkylcarbonylamino, Phenyl, $C_1$-$C_4$-Alkylphenyl oder Sulfo substituiert sein können.

11. Azofarbstoffe gemäss Anspruch 1, worin
$R^1$ einen unsubstituierten $C_1$-$C_4$-Alkylrest oder einen gegebenenfalls durch Methyl, Ethyl, Methoxy, Ethoxy, Nitro, Chlor, Sulfo, Acetylamino, Phenyl oder Phenoxy substituierten Phenylrest,
$R^2$ Wasserstoff, einen unsubstituierten $C_1$-$C_4$-Alkylrest oder einen gegebenenfalls durch Methyl, Ethyl, Methoxy, Ethoxy, Nitro, Chlor, Sulfo, Acetylamino, Phenyl oder Phenoxy substituierten Phenylrest,
und
KK den Rest einer Kupplungskomponente aus der Reihe der Acetoacetanilide, Phenole, Aniline, Diphenylamine, Naphthylamine, Naphthole, Indole, Chinoline, Pyridone, Pyrazole, Chinolone und Aminopyridine bedeutet, wobei diese Reste unsubstituiert oder durch Hydroxy, Amino, Alkylamino,

Dialkylamino, Halogen, Alkoxy, Aryl, Aryloxy, Alkylcarbonylamino, Arylcarbonylamino, Alkylsulfonylamino oder Sulfo substituiert sind.

12. Azofarbstoffe gemäss Anspruch 1, worin $R^1$ einen unsubstituierten oder durch Chlor substituierten Phenylrest, $R^2$ Wasserstoff oder einen unsubstituierten $C_1$-$C_4$-Alkylrest und KK den Rest eines Anilins, Naphthylamins oder Tetrahydrochinolins bedeutet, wobei diese Reste durch $C_1$-$C_4$-Alkyl, $C_1$-$C_4$-Alkylcarbonylamino, Phenyl, $C_1$-$C_4$-Alkylphenyl oder Sulfo substituiert sein können.

13. Verfahren zur Herstellung der Azofarbstoffe gemäss Anspruch 1, dadurch gekennzeichnet, dass man eine Verbindung der Formel

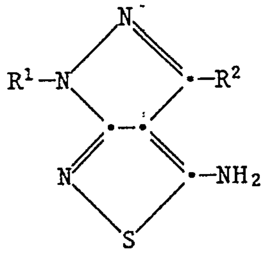

(2)

diazotiert und auf eine Kupplungskomponente

H—KK (3)

kuppelt, wobei $R^1$, $R^2$ und KK die unter der Formel (1) angegebene Bedeutung aufweisen.

14. Verwendung der Azofarbstoffe gemäss Anspruch 1, welche keine wasserlöslichmachende Gruppe aufweisen, als Dispersionsfarbstoffe zum Färben oder Bedrucken von halbsynthetischen oder synthetischen hydrophobem Material, insbesondere Textilmaterial aus Polyesterfasern.

15. Verwendung der Azofarbstoffe gemäss Anspruch 1, welche mindestens eine Sulfogruppe aufweisen, zum Färben und Bedrucken von Seide, Wolle und Polyamidmaterial, insbesondere von Textilmaterial aus Polyamidfasern.

16. Verfahren zum Färben oder Bedrucken von Textilmaterial, dadurch gekennzeichnet, dass man eine oder mehrere der in Anspruch 1 definierten Verbindungen auf das Material aufbringt oder diesem einverleibt.

17. Das gemäss Anspruch 16 gefärbte oder bedruckte Material.